(19) **Europäisches Patentamt**

**European Patent Office**

**Office européen des brevets**

(11) **EP 1 212 166 B1**

(12) **EUROPEAN PATENT SPECIFICATION**

(45) Date of publication and mention
of the grant of the patent:
**16.06.2004 Bulletin 2004/25**

(51) Int Cl.⁷: **B23K 26/06**

(86) International application number:
**PCT/GB2000/003496**

(21) Application number: **00960831.6**

(22) Date of filing: **12.09.2000**

(87) International publication number:
**WO 2001/021353 (29.03.2001 Gazette 2001/13)**

(54) **LASER APPARATUS FOR USE IN MATERIAL PROCESSING**

**LASERGERÄT ZUR BENUTZUNG IN DER MATERIALBEARBEITUNG**

**APPAREIL LASER POUVANT ETRE UTILISE DANS LE TRAITEMENT DE MATIERE**

(84) Designated Contracting States:
**AT BE CH CY DE DK ES FI FR GB GR IE IT LI LU MC NL PT SE**

(30) Priority: **17.09.1999 GB 9922082**

(43) Date of publication of application:
**12.06.2002 Bulletin 2002/24**

(73) Proprietor: **Isis Innovation Limited
Summertown, Oxford, Oxfordshire OX2 7BZ (GB)**

(72) Inventors:
• **LACZIK, Zsolt John
Dept. of Engineering Science
Oxford Oxfordshire OX1 3PJ (GB)**

• **GOODALL, Francis Nicholas
Rutherford Appleton Lab.
Didcot, Oxfordshire OX11 0QX (GB)**

(74) Representative: **Nicholls, Michael John et al
J.A. KEMP & CO.
14, South Square
Gray's Inn
London WC1R 5JJ (GB)**

(56) References cited:
EP-A- 0 679 469          WO-A-94/01240
WO-A-98/14302          FR-A- 2 745 214
GB-A- 2 278 458          GB-A- 2 315 700
US-A- 5 481 407          US-A- 5 521 352
US-A- 5 539 175          US-A- 5 589 955

EP 1 212 166 B1

**Description**

The present invention relakes to laser apparatus for use in material processing according to the preambles of claims 1 and 4 and also to a method of manufacturing a phase filter according to the preamble of claim 9 (see, for example, EP-A-0 679 469) wherein this apparatus could be used for cutting, welding, machining and other related processing techniques of materials.

In conventional laser cutting, welding and machining systems light from a CW or pulsed laser is focused to an approximately diffraction limited spot using refractive lens elements and/or reflective mirrors. When the focused spot is brought into contact with a workpiece the very high light intensity in the focused spot results in localised heating of the workpiece and consequently localised melting, evaporation or ablation of the material occurs. Normally a gas flow co-axial with the optical system is also provided to protect the lens elements by forcing sputtered material away from the lens elements and to enhance the cutting, welding or machining process. In the case of welding the gas is usually inert but for cutting the gas may be corrosive and contribute to the cutting process. The focused spot and the workpiece must be moved with respect to one another in such a way that the workpiece is welded, cut or machined in pre-defined areas.

In many cases, however, the optimum light intensity distribution for the process described above is not the one corresponding to a single diffraction limited focused spot. Instead, it has been found that in some cases the use of two focused spots separated by a few millimetres can be advantageous.

In WO 98/14302 laser cutting apparatus is described in which the light from the laser is imaged to two separated focal points on a common axis by means of a multi-lens or a curved reflective surface. Similarly, in US5521352 laser apparatus for cutting a metal workpiece is described which uses a semi-silvered mirror to split the light from the laser into two beams. The two beams are then directed, using conventional reflective optics, to opposing surfaces of the workpiece.

With the apparatus described in the documents referred to above the light from a laser beam is focussed to two separated focal spots using conventional refractive/reflective optical elements. In general, the apparatus have very limited degrees of freedom and are inflexible. For example, in WO 98/14302 the only selectable design parameters are the radius of the central region of the lens element and the difference in curvature between the central region and the annulus. This significantly restricts the extent to which characteristics such as the separation between the foci, the power split ratio and the axial and spatial resolution of the foci may be selected and in some cases the opportunity for selection of such characteristics is not available.

Also, once the design parameters are chosen and a lens element with the appropriate radii of the central region and the annulus is provided, the apparatus is only capable of generating the two focal spots as determined by that lens element. To alter the performance characteristics of the apparatus, a completely new alternative lens element would have to replace the existing lens element. Furthermore, it should be noted that the laser cutting apparatus described in the documents referred to above are limited to specific intensity distributions associated with the two separate focus spots.

In GB2278458 a converter for a laser is described that adjusts the intensity profile of the laser beam across a single focused spot. The converter consists of a phase zone plate array consisting of a two dimensional array of close packed diffracting Fresnel zone plates randomly arranged to cause a phase delay of 0 or $\pi$ radians. The converter is used to reduce fluctuations in intensity across the focal spot and thereby ensures a more uniform focal spot is produced. However, with the converter only the intensity across the focal spot itself is adjusted, the intensity distribution is not altered such that the adjusted distribution extends beyond the focused spot that would be produced without the converter in place. Furthermore, the adjustment of the intensity distribution to increase the uniformity of the intensity is restricted to a plane perpendicular to the optical axis. The converter cannot alter the intensity distribution of the laser beam in any other way. In particular, the overall distribution of light intensity, the 'envelope' of the light intensity and/or the number of focal spots cannot be altered using the converter described in GB 2278458.

EP 0679469 describes a laser machining apparatus comprising a mask which shapes a laser beam to create an element pattern, a hologram which divides the shaped laser beam to create a plurality of shaped laser beams, each having the shape of the element pattern, and a lens which focuses the plurality of shaped laser beams onto a surface to be machined. EP 0679469 also describes a method of manufacturing the hologram comprising the steps of dividing the hologram into a number of phase-quantized cells, superimposing a plurality of spatial frequencies to generate a phase-distribution pattern, each spatial frequency corresponding to a desired laser beam position on the surface to be machined, quantising the phase-distribution pattern, optimising the quantisation error by varying the superimposed initial phases, and assigning the phase of each cell of the hologram according to the optimised, quantized phase-distribution pattern.

GB 2315700 describes a spatial light modulator (SLM) for use in 3-D model construction. The SLM is addressed with level slice model data such that a pattern corresponding to the level slice of a 3-D model is projected onto the surface of a photopolymer. The 3-D model is thus built layer by layer by addressing the SLM with successive level slice data and exposing the photopolymer to the modulated radiation.

US 5589955 describes a laser-scribing device for projecting and scribing a pattern onto the surface of a workpiece. Laser light illuminates a phase-modulation liquid crystal SLM, upon which is recorded a computer hologram. The laser light undergoes two-dimensional phase modulation before being imaged onto the surface of the workpiece by a Fourier transformation lens.

On the other hand, the present invention seeks to provide a novel optical arrangement that is capable of generating arbitrary predetermined three dimensional light intensity distributions that may be optimised for particular laser processing tasks.

The present invention provides laser apparatus for use in material processing of a workpiece, the apparatus comprising a coherent light source, a housing containing one or more focusing elements and a phase filter, the phase filter having a plurality of regions with each region being assigned a predetermined phase shift from a plurality of possible phase shifts, the phase shifts of the plurality of regions being chosen in dependence on a desired intensity distribution of light incident on the workpiece which extends in at least a spatial dimension parallel to the optical axis beyond the focused spot produced by the apparatus in the absence of the filter.

In a preferred embodiment the phase filter is mounted between the one or more focussing elements and the workpiece. The phase filter may be provided in a removable cartridge that is removably mounted within the housing.

In an alternative aspect the present invention provides laser conditioning apparatus for use in material processing of a workpiece, the conditioning apparatus comprising an adapter housing containing a phase filter, the adapter housing having connection means for mounting the adapter housing between a coherent light source and one or more focusing elements, the phase filter having a plurality of regions with each region being assigned a predetermined phase shift from a plurality of possible phase shifts, the phase shifts of the plurality of regions being chosen in dependence on the desired intensity distribution of light incident on the workpiece which extends in at least a spatial dimension parallel to the optical axis beyond the focused spot produced by a laser apparatus in the absence of the filter.

Ideally, the plurality of phase shift regions of the filter produces an intensity distribution that extends beyond a diffraction limited focused spot in at least one spatial dimension. The phase filter may be arranged to produce a desired three dimensional geometry of the intensity distribution. Alternatively or in addition, the phase filter may produce a plurality of separate intensity peaks.

The phase shifts of the plurality of regions of the filter are iteratively optimised with respect to the desired intensity distribution of the light incident on the workpiece and preferably the phase shifts of the plurality of regions of the filter are iteratively optimised using a direct binary search.

In another aspect the present invention provides a method of manufacturing a phase filter for use in laser material processing apparatus, the method comprising the steps of: determining a desired intensity distribution of light incident on a workpiece which extends in at least a spatial dimension parallel to the optical axis beyond the focused spot produced by the laser material processing apparatus in the absence of the filter; assigning initial respective phase shifts to a plurality of regions of the filter; determining an error factor with respect to the similarity of the intensity distribution generated using the assigned phase shifts to the desired intensity distribution; iteratively optimising the phase shifts assigned to each region so as to determine final phase shifts for each region of the filter; and generating a phase filter with a plurality of regions, each region having the final phase shift determined by the iterative optimisation step.

With the present invention there are very large degrees of freedom in the design of the phase-only filters and this makes it possible to achieve almost any desired intensity distribution defined in a three-dimensional volume around the lens focus. This, in turn, enables high precision, high speed and efficient material processing using a laser. Furthermore, the laser apparatus can be easily adjusted to produce an alternative intensity distribution simply by altering or replacing the phase-only filter, the main and more expensive part of the apparatus, the focusing lens, can be retained and reused. Where a spatial light modulator is used as the phase-only filter, alteration of the intensity distribution is simply a matter of re-programming the modulator and so the laser apparatus is very flexible and responsive to the individual intensity distribution requirements of particular processing tasks.

It will, of course, be understood that although reference is made herein to laser sources this is intended to generally cover both coherent and partially coherent laser sources.

An embodiment of the present invention will now be described by way of example with reference to the accompanying drawings, in which:

Figures 1a, 1b and 1c are schematic diagrams of a laser focusing system in accordance with the present invention with the phase-only filter in different positions;

Figure 2 is a schematic diagram of a conventional laser focusing system with an adapter incorporating a phase-only filter in accordance with the present invention;

Figures 3, 4 and 5 are tables of phase-only filter designs and the intensity distributions in the XZ and YZ planes produced using the filters.

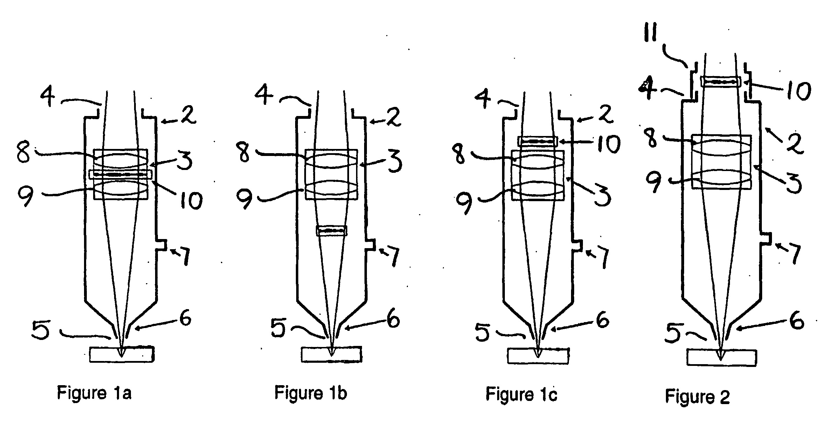

As shown in Figures 1a, 1b and 1c a laser focusing system suitable for use in processing of a workpiece consists of a housing 2 that is generally cylindrical within which is positioned imaging optics 3. The housing 2 has opposing windows 4, 5 at each end of the housing, aligned with the imaging optics 3, through which the laser beam passes. The housing 2 also includes a nozzle 6 that is positioned over the work piece when in use and a fluid inlet 7 for the introduction of a pressurised gas into the cavity of the housing. Although not shown, a light source in the form of a laser is aligned with the windows 4, 5 so as to illuminate the workpiece through the focusing system. The laser may be any one of the many commercially available lasers such as $CO_2$, excimer or YAG lasers. These lasers are capable of generating light over a broad range of wavelengths from, for example 193 nm with an excimer laser to 10.6 μm with a $CO_2$ laser.

The imaging optics 3 consists of refractive/reflective lens elements 8,9 (refractive lenses are shown in Figure 1) for producing a single diffraction limited focus and a phase-only filter 10. The phase-only filter 10 may be positioned in the pupil plane of the focusing lens elements as shown in Figure 1a. Alternatively, the filter 10 may be positioned between the lens elements 8, 9 and the workpiece as shown in Figure 1b or between the lens elements 8, 9 and the laser as shown in Figure 1c. The phase-only filter 10 may be fixed in the imaging optics 3 or may be provided in a cartridge that is removably inserted into imaging optics so as to simplify replacement of the filter 10 with alternative phase-only filters, in dependence on the filter most suitable for the particular processing task to be performed.

As shown in Figure 2, laser conditioning apparatus in the form of an adapter 11 may be provided in the form of a cylindrical tube within which is mounted the phase-only filter 10. The adapter 11 includes engaging means for connecting the adapter to the housing of a conventional laser focusing system, between the laser and the window to the housing. In this way, a conventional laser focusing system can be retro-fitted with the phase-only filter so as to enable greater flexibility in the intensity distributions generated by the laser focusing system for use in material processing.

The phase-only filter is preferably square or circular and has a diameter that ideally corresponds to the diameter of the lens elements, for example 38 mm. The filter consists of a plurality of individual regions each assigned a respective phase shift, with the phase shift of each region determined using optimisation software to achieve a predetermined or target intensity distribution defined in a 3D volume around the original lens focus. Where the filter is a binary filter the individual pixels of the filter cause either a 0 or π radians phase delay. However, more complex filters are also envisaged additionally incorporating phase shifts of 1/2π radians and 3/2π radians, for example. The filter may be a pixellated filter in the form of a programmable spatial light modulator, for example. One preferred filter employs an array of 128 x 128, however, arrays of 1,000 x 1,000 or more are also envisaged. Alternative filters may incorporate ringshaped, hexagonal or even irregular regions each assigned a predetermined phase shift.

The filter 10 may be fabricated from a fused silica substrate using conventional techniques. For example, a layer of photoresist is applied to the surface of a fused silica substrate. The predetermined design of the filter is then patterned in the photoresist using a chrome mask and conventional contact printing or projection lithographic techniques. The photoresist exposed through the chrome mask is subsequently etched to expose regions of the silica substrate and the exposed silica is then patterned by etching the exposed regions of the silica through the remaining photoresist. The exposed silica is etched to a predetermined depth to achieve the desire phase delay Φ and the remaining photoresist is subsequently removed. The etched depth may be calculated using the following equation:

$$h = \frac{\Phi}{2\pi} \cdot \frac{\lambda}{n\text{-}n_0}$$

where h is the etch depth, λ is the wavelength of the incident light, *n* is the refractive index of the substrate and $n_0$ is the refractive index of the environment. Thus, for a phase delay of π radians the etch depth is $\lambda/2(n\text{-}n_0)$.

The optimisation software, used to determine the design of the filter for any particular target intensity distribution, may employ iterative algorithms such as Direct Binary Search or an iterative inverse Fourier transform to determine the particular design of the filter. For example, to design a filter for a target intensity distribution $I_T(x,y,z)$ at and around the original lens-only focus, a set of $N_T$ discrete points $(x_m, y_m, z_m)$ are selected in such a way that the intensities at the points $I_{Tm}(x_m, y_m, z_m)$ can serve as a representative set for the continuous distribution $I_T(x,y,z)$.

The lens pupil and the filter are then divided into $N_P$ regions (pixels). By using Fourier optics theory, or by directly evaluating the optical diffraction integrals, the complex amplitudes due to the individual lens regions, the lens pixels, are then calculated at the target points. These lens-only 'pixel contributions' are denoted $A_{Lmn,}$ where $m=1..N_T$ and $n=1..N_P$.

Also, the effect of the phase-only filter is assumed to be a constant $\Phi_n$ phase shift within each pixel. The complex amplitude pixel contributions due to the combination of the lens and the filter can then be written as $A_{mn}=A_{Lmn} exp(i\Phi_n)$.

For any given set of $\Phi_n$ pixel phase shift values, the complex amplitudes and intensities at the target points can then be obtained by summation over all the pixels as

$$A_m = \sum_{n=1}^{N_r} A_{Lmn} e^{i\Phi_n} \qquad \text{and} \qquad I_m = |A_m|^2 . \qquad (1)$$

A $g$ error function is next defined as the metric for the closeness of the desired $I_T$ distribution and the distribution $I$ produced by the lens/filter combination:

$$g = \sum_{m=1}^{N_T} |I_{Tm} - I_m|^2 . \qquad (2)$$

The iterative design algorithm then comprises the following steps:

1) Calculate the $A_{Lmn}$ pixel contributions.
2) Initialise the $\Phi_n$ pixel phase shifts to random or predefined values.
3) Calculate the initial error function $g_0$ using equations (1) and (2).
4) Select a random pixel index.
5) Modify the phase shift value of the selected pixel.
6) Re-calculate the error function.
7) If the new error function value is smaller than the previous one, keep new pixel phase shift value, otherwise reset pixel phase and error function to previous value.
8) Repeat 4) to 7) until changes in g become smaller than a predefined limit.

The critical elements of the algorithm are the initial filter phase values, the form of the error function and the way the 'random' pixel indices are generated. The error function can be much more complex than the one shown in (2). For example, it can be highly non-linear, or can even be changed automatically as the algorithm progresses.

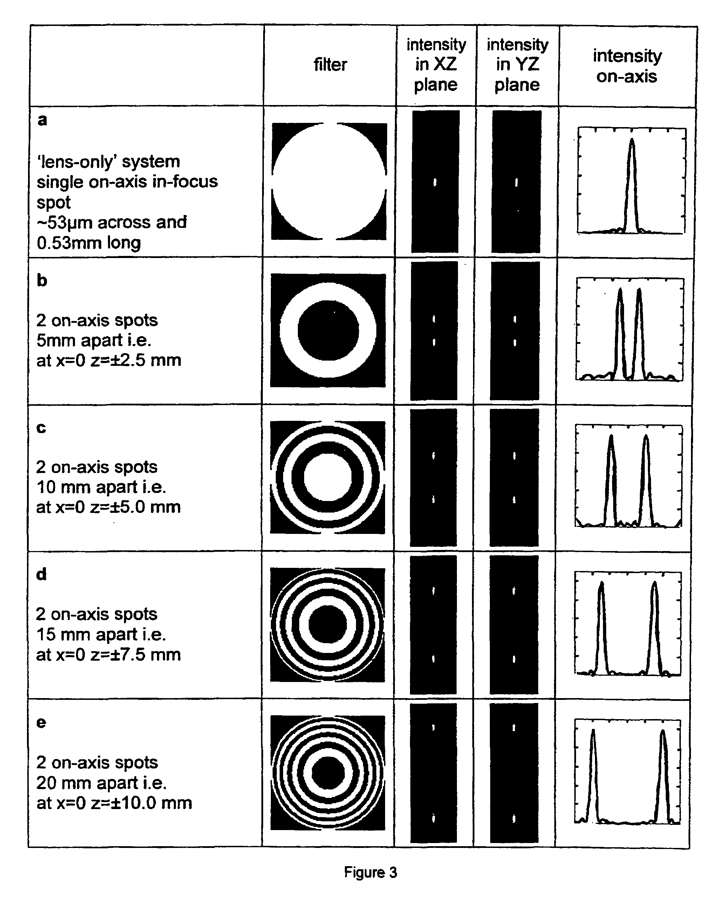

In Figures 3, 4 and 5 examples of different filter designs for a 0.1 NA focussing lens and a λ=10.6 μm laser are provided with the black and white representing 0 and π phase shifts. The second column in the Figures is a diagram of the filter design with the third and fourth columns showing the light intensity distributions in the XZ and YZ planes respectively (the Z axis is parallel to the optical axis whereas the X and Y axes are perpendicular to the optical axis) and the fifth column shows on-axis intensity line scans. Figure 3a shows the single focused spot produced by the lens on its own. For the above parameters the single focused spot would be ~0.53 mm long (along the optical axis) and ~53 μm across. Figures 3b-3e show filters designed to produce two on-axis foci with a range of separations between them. Thus, Figure 3b shown two on-axis foci separated by 5 mm whereas the foci produced using the filter of Figure 3e are separated by 20 mm. The filters of Figures 3b to 3e are similar to a Fresnel zone plate, however, they have been optimised to produce only two foci (and not a whole series of diffraction orders) and so the efficiencies of the filters of the present invention are greater than the efficiencies achieved using conventional Fresnel zone plates.

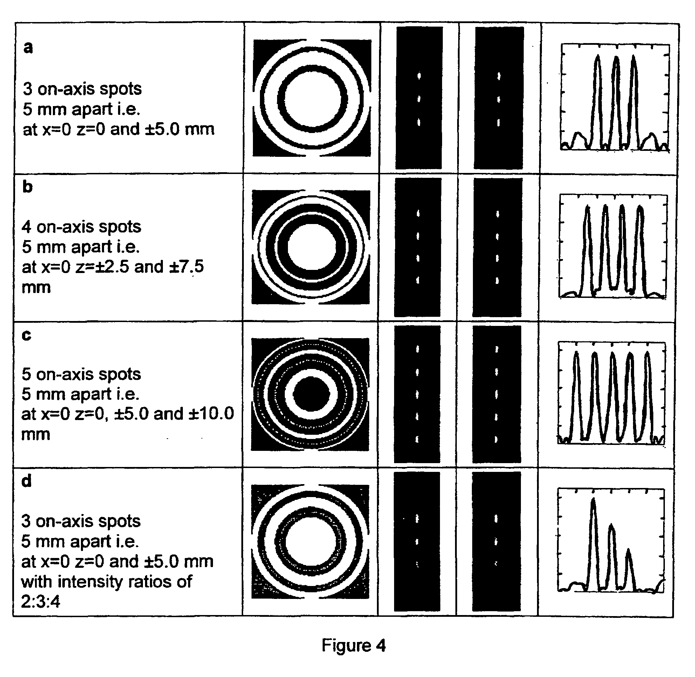

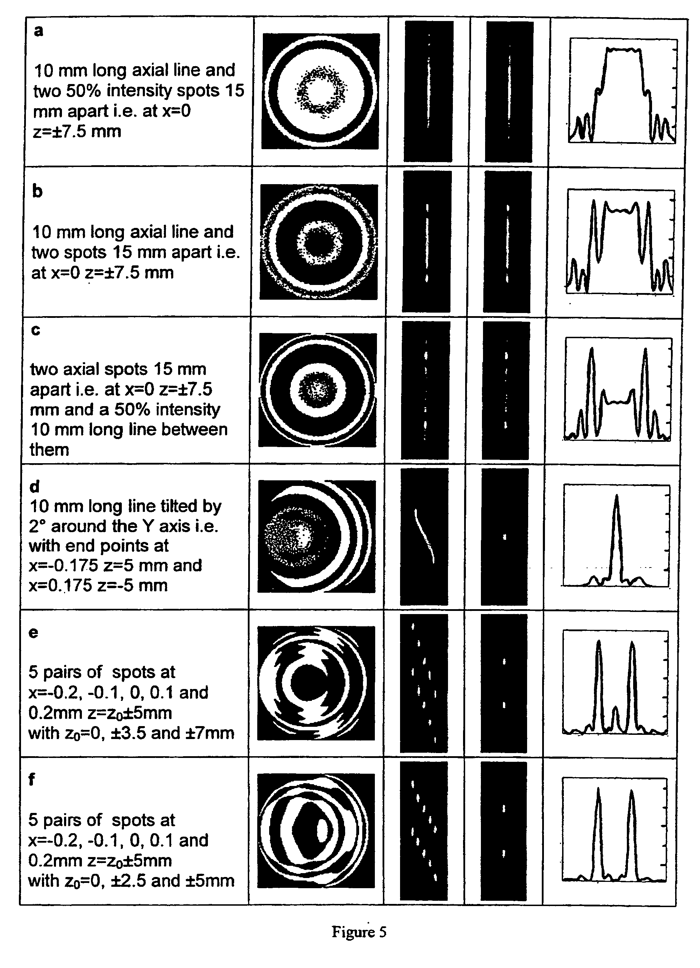

Turning now to Figures 4a to 4d, the phase filters have been designed to produce more than two on-axis foci with Figures 4a, 4b and 4c having equal intensity foci. Figure 4d, on the other hand, shows a four level filter (the grey levels shown in this filter correspond to 0, 1/2π and 3/2π phase shifts) that produces three on-axis foci with intensity ratios of 2:3:4. Figures 5a to 5f show the designs of filters for generating more complex intensity distributions. Thus, Figure 5a shows a filter producing a 10 mm long axial line distribution with a 50% intensity spot at each end of the line i.e. ~15 mm apart; Figure 5b shows a filter that produces an intensity distribution similar to that of Figure 5a except that the intensity of the spots is equal to that of the line. In Figure 5c the intensity distribution is similar to that of Figures 5a and 5b except that the intensity of the line is 50% that of the spots. The filter of Figure 5d illustrates that the intensity distribution does not need to have cylindrical symmetry; this filter produces a 10 mm line that is tilted by 2° around the y axis. Figures 5e and 5f illustrate additional filter designs that produce a plurality of intensity peaks in the X-Z plane.

Thus, as has been shown, with the present invention there are few restrictions on the target intensity distributions that can be generated using the laser apparatus of the present invention. With the present invention the phase filter can be designed to meet the desired characteristics of the focal spot of the laser apparatus with respect to: the number of focal spots, spatial positions of the focal spots; the peak intensities; the axial resolution; the radial resolution; and the envelope function. Indeed, arbitrary intensity distributions in all three dimensions can be produced using the present invention. As the intensity distribution of the focal spot(s) can be designed in all three dimensions, high aspect ratio machining of the surface of a workpiece is possible. In particular, an extended on-axis line of equal intensity can be generated that is suitable to machine a channel without the need for the workpiece or the laser apparatus to be moved during the machining to re-focus the laser. Although reference has been made to the filter being phase-only, it will be apparent that it is not essential for the filter to be phase-only.

Although the present invention has been described above with reference to conventional cutting, welding and machining processes, with the laser apparatus described above micromachining of structures with dimensions as small as 0.25 μm can be achieved. Such micromachining is normally performed using the LIGA process. Using the phase filter of the present invention in combination with conventional lens elements, micromachining with lasers can be achieved with aspect ratios comparable to those achieved with x-rays. Moreover, the laser apparatus is suitable for cutting or otherwise processing a wide range of materials including metals such as steel, wood, plastics including polymers such as PMMA, ceramics and silicon.

**Claims**

1. Laser apparatus for use in material processing of a workpiece, the apparatus comprising a coherent or partially coherent light source, a housing (2) containing one or more focusing elements (8,9) and a phase filter (10), the phase filter (10) having a plurality of regions with each region being assigned a predetermined phase shift from a plurality of possible phase shifts, **characterised in that** the phase shifts of the plurality of regions are chosen in dependence on a desired intensity distribution of light incident on the workpiece which extends in at least a spatial dimension parallel to the optical axis beyond the focused spot produced by the apparatus in the absence of the filter (10).

2. Laser apparatus as claimed in claim 1, wherein the phase filter (10) is mounted in the pupil plane of the one or more focussing elements (8,9).

3. Laser apparatus as claimed in either of claim 1, wherein the phase filter (10) is provided in a removable cartridge that is removably mounted within the housing (2).

4. Laser conditioning apparatus for use in material processing of a workpiece, the conditioning apparatus comprising an adapter housing (2) containing a phase filter (10), the adapter housing (2) having connection means for mounting the adapter housing (2) between a coherent light source and one or more focusing elements (8,9), the phase filter (10) having a plurality of regions with each region being assigned a predetermined phase shift from a plurality of possible phase shifts, **characterised in that** the phase shifts of the plurality of regions are chosen in dependence on the desired intensity distribution of light incident on the workpiece which extends in at least a spatial dimension parallel to the optical axis beyond the focused spot produced by laser apparatus in the absence of the filter (10).

5. Apparatus as claimed in any one of the preceding claims, wherein the phase filter (10) is a programmable spatial light modulator.

6. Apparatus as claimed in any one of the preceding claims, wherein each region of the filter (10) has a phase shift of either 0 or π radians.

7. Apparatus as claimed in any one of the preceding claims, wherein the phase filter (10) produces a desired three-dimensional geometry of the light incident on the workpiece.

8. Apparatus as claimed in any one of the preceding claims, wherein the phase filter (10) produces a plurality of separate intensity peaks.

9. A method of manufacturing a phase fitter (10) for use in laser material processing apparatus, the method **characterised by** the steps of: determining a desired intensity distribution of light incident on a workpiece; assigning initial respective phase shifts to a plurality of regions of the filter (10); determining an error factor with respect to the similarity of the intensity distribution generated using the assigned phase shifts to the desired intensity distribution; iteratively optimising the phase shifts assigned to each region so as to determine final phase shifts for each region of the filter (10); and generating a phase filter (10) with a plurality of regions, each region having the final phase shift determined by the iterative optimisation step, so that the desired intensity distribution of light extends in at least a spatial dimension parallel to the optical axis beyond the focused spot produced by the laser material processing apparatus in the absence of the filter.

**10.** A method as claimed in claim 9, wherein the assigned phase shifts are iteratively optimised using a direct binary search.

**Patentansprüche**

**1.** Laservorrichtung zur Verwendung in der Materialbearbeitung eines Werkstücks, wobei die Vorrichtung eine kohärente oder teilweise kohärente Lichtquelle und ein Gehäuse (2), das eines oder mehrere Fokussierungselemente (8, 9) und einen Phasenfilter (10) enthält, umfasst, wobei der Phasenfilter (10) mehrere Regionen aufweist, wobei jeder Region eine zuvor festgelegte Phasenverschiebung aus einer Gruppe möglicher Phasenverschiebungen zugewiesen ist, **dadurch gekennzeichnet, dass** die Phasenverschiebungen der mehreren Regionen in Abhängigkeit von einer gewünschten Intensitätsverteilung von auf dem Werkstück auftreffendem Licht ausgewählt werden, welche sich in wenigstens einer räumlichen Dimension parallel zur optischen Achse über den fokussierten Punkt, der von der Vorrichtung ohne den Filter (10) erzeugt wird, hinaus erstreckt.

**2.** Laservorrichtung nach Anspruch 1, wobei der Phasenfilter (10) in der Pupillenebene des einen oder der mehreren Fokussierungselemente (8, 9) montiert ist.

**3.** Laservorrichtung nach den Ansprüchen 1 und 2, wobei der Phasenfilter (10) in einer herausnehmbaren Kartusche untergebracht ist, die herausnehmbar in dem Gehäuse (2) montiert ist.

**4.** Laserkonditionierungsvorrichtung zur Verwendung in der Materialbearbeitung eines Werkstücks, wobei die Konditionierungsvorrichtung ein Adaptergehäuse (2), das einen Phasenfilter (10) enthält, umfasst, wobei das Adaptergehäuse (2) Verbindungsmittel für die Montage des Adaptergehäuses (2) zwischen einer kohärenten Lichtquelle und einem oder mehreren Fokussierungselementen (8, 9) aufweist, wobei der Phasenfilter (10) mehrere Regionen aufweist, wobei jeder Region eine zuvor festgelegte Phasenverschiebung aus einer Gruppe möglicher Phasenverschiebungen zugewiesen ist, **dadurch gekennzeichnet, dass** die Phasenverschiebungen der mehreren Regionen in Abhängigkeit von der gewünschten Intensitätsverteilung von auf dem Werkstück auftreffendem Licht ausgewählt werden, welche sich in wenigstens einer räumlichen Dimension parallel zur optischen Achse über den fokussierten Punkt, der von der Laservorrichtung ohne den Filter (10) erzeugt wird, hinaus erstreckt.

**5.** Vorrichtung nach einem der vorangehenden Ansprüche, wobei es sich bei dem Phasenfilter (10) um einen programmierbaren Raumlichtmodulator handelt.

**6.** Vorrichtung nach einem der vorangehenden Ansprüche, wobei jede Region des Filters (10) eine Phasenverschiebung von entweder 0 oder $\pi$ Radianten aufweist.

**7.** Vorrichtung nach einem der vorangehenden Ansprüche, wobei der Phasenfilter (10) eine gewünschte dreidimensionale Geometrie des auf dem Werkstück auftreffenden Lichts erzeugt.

**8.** Vorrichtung nach einem der vorangehenden Ansprüche, wobei der Phasenfilter (10) mehrere separate Intensitätsspitzen erzeugt.

**9.** Verfahren zur Herstellung eines Phasenfilters (10) zur Verwendung in einer Laservorrichtung zur Materialbearbeitung, wobei das Verfahren durch folgende Schritte gekennzeichnet ist: Ermitteln einer gewünschten Intensitätsverteilung von auf ein Werkstück auftreffendem Licht; Zuweisen anfänglicher jeweiliger Phasenverschiebungen zu mehreren Regionen des Filters (10); Ermitteln eines Fehlerfaktors hinsichtlich der Ähnlichkeit der Intensitätsverteilung, die unter Verwendung der zugewiesenen Phasenverschiebungen erzeugt wurde, mit der gewünschten Intensitätsverteilung; iterative Optimierung der Phasenverschiebungen, die jeder Region zugewiesen wurden, um endgültige Phasenverschiebungen für jede Region des Filters (10) zu bestimmen; und Herstellen eines Phasenfilters (10) mit mehreren Regionen, wobei für jede Region die endgültige Phasenverschiebung mittels des Schrittes der iterativen Optimierung bestimmt wurde, so dass sich die gewünschte Intensitätsverteilung des Lichts in wenigstens einer räumlichen Dimension parallel zur optischen Achse über den fokussierten Punkt, der von der Laservorrichtung zur Materialbearbeitung ohne den Filter erzeugt wird, hinaus erstreckt.

**10.** Verfahren nach Anspruch 9, wobei die zugewiesenen Phasenverschiebungen unter Verwendung einer direkten binären Suche iterativ optimiert werden.

**Revendications**

1. Appareil laser destiné à être utilisé dans le traitement de matière d'une pièce, l'appareil comprenant une source de lumière cohérente ou partiellement cohérente, un boîtier (2) contenant un ou plusieurs éléments de concentration (8,9) et un filtre (10) de phase, le filtre (10) de phase ayant une pluralité de régions, à chaque région étant attribué un déphasage prédéterminé parmi plusieurs déphasages possibles, **caractérisé en ce que** les déphasages de la pluralité de régions sont choisis en fonction d'une distribution d'intensité voulue d'une lumière incidente sur la pièce qui s'étend dans au moins une dimension dans l'espace parallèle à l'axe optique au-delà du point de concentration produit par l'appareil en l'absence du filtre (10).

2. Appareil laser selon la revendication 1, dans lequel le filtre (10) de phase est monté dans le plan formant la pupille du ou des éléments de concentration (8,9).

3. Appareil laser selon la revendication 1, dans lequel le filtre (10) de phase est disposé dans une cartouche amovible montée de manière amovible dans le boîtier (2).

4. Appareil de conditionnement de laser destiné à être utilisé dans le traitement de la matière d'une pièce, l'appareil de conditionnement comprenant un boîtier (2) d'adaptateur comportant un filtre (10) de phase, le boîtier (2) d'adaptateur ayant un moyen d'accouplement pour monter le boîtier (2) d'adaptateur entre une source de lumière cohérente et un ou plusieurs éléments de concentration (8,9), le filtre (10) de phase ayant une pluralité de régions, à chaque région étant attribué un déphasage prédéterminé parmi une pluralité de déphasages possibles, **caractérisé en ce que** les déphasages de la pluralité de régions sont choisis en fonction de la distribution d'intensité voulue de la lumière incidente sur la pièce qui s'étend dans au moins une dimension dans l'espace parallèlement à l'axe optique au-delà du point de concentration produit par l'appareil laser en l'absence du filtre (10).

5. Appareil selon l'une quelconque des revendications précédentes, dans lequel le filtre (10) de phase est un modulateur spatial programmable de lumière.

6. Appareil selon l'une quelconque des revendications précédentes, dans lequel chaque région du filtre (10) a un déphasage de 0 ou de $\pi$ radians.

7. Appareil selon l'une quelconque des revendications précédentes, dans lequel le filtre (10) de phase produit une géométrie voulue en trois dimensions de la lumière incidente sur la pièce.

8. Appareil selon l'une quelconque des revendications précédentes, dans lequel le filtre (10) de phase produit une pluralité de pics d'intensité séparés.

9. Procédé de fabrication d'un filtre (10) de phase destiné à être utilisé dans un appareil de traitement de matière laser, le procédé étant **caractérisé par** les étapes consistant à : déterminer une distribution d'intensité voulue de la lumière incidente sur une pièce; attribuer des déphasages initiaux respectifs à une pluralité de régions du filtre (10) ; déterminer un facteur d'erreur par rapport à la similitude de la distribution d'intensité produite à l'aide des déphasages attribués avec la distribution d'intensité voulue ; optimiser de manière itérative les déphasages attribués à chaque région de manière à déterminer des déphasages ultimes pour chaque région du filtre (10) ; et produire un filtre (10) de phase à plusieurs régions, chaque région ayant le déphasage final déterminé par l'étape d'optimisation itérative, de façon que la distribution d'intensité voulue de la lumière s'étende dans au moins une dimension dans l'espace parallèlement à l'axe optique au-delà du point de concentration produit par l'appareil de traitement de matière laser en l'absence du filtre.

10. Procédé selon la revendication 9, dans lequel les déphasages attribués sont optimisés de manière itérative à l'aide d'une recherche binaire directe.

Figure 1a  Figure 1b  Figure 1c  Figure 2

| | filter | intensity in XZ plane | intensity in YZ plane | intensity on-axis |
|---|---|---|---|---|
| **a**<br><br>'lens-only' system single on-axis in-focus spot ~53µm across and 0.53mm long | | | | |
| **b**<br><br>2 on-axis spots 5mm apart i.e. at x=0 z=±2.5 mm | | | | |
| **c**<br><br>2 on-axis spots 10 mm apart i.e. at x=0 z=±5.0 mm | | | | |
| **d**<br><br>2 on-axis spots 15 mm apart i.e. at x=0 z=±7.5 mm | | | | |
| **e**<br><br>2 on-axis spots 20 mm apart i.e. at x=0 z=±10.0 mm | | | | |

Figure 3

| | | | | |
|---|---|---|---|---|
| **a**<br><br>3 on-axis spots<br>5 mm apart i.e.<br>at x=0 z=0 and ±5.0 mm | | | | |
| **b**<br><br>4 on-axis spots<br>5 mm apart i.e.<br>at x=0 z=±2.5 and ±7.5 mm | | | | |
| **c**<br><br>5 on-axis spots<br>5 mm apart i.e.<br>at x=0 z=0, ±5.0 and ±10.0 mm | | | | |
| **d**<br><br>3 on-axis spots<br>5 mm apart i.e.<br>at x=0 z=0 and ±5.0 mm<br>with intensity ratios of<br>2:3:4 | | | | |

Figure 4

| | | | | |
|---|---|---|---|---|
| **a**<br><br>10 mm long axial line and two 50% intensity spots 15 mm apart i.e. at x=0 z=±7.5 mm | | | | |
| **b**<br><br>10 mm long axial line and two spots 15 mm apart i.e. at x=0 z=±7.5 mm | | | | |
| **c**<br><br>two axial spots 15 mm apart i.e. at x=0 z=±7.5 mm and a 50% intensity 10 mm long line between them | | | | |
| **d**<br>10 mm long line tilted by 2° around the Y axis i.e. with end points at x=-0.175 z=5 mm and x=0.175 z=-5 mm | | | | |
| **e**<br><br>5 pairs of spots at x=-0.2, -0.1, 0, 0.1 and 0.2mm z=$z_0$±5mm with $z_0$=0, ±3.5 and ±7mm | | | | |
| **f**<br><br>5 pairs of spots at x=-0.2, -0.1, 0, 0.1 and 0.2mm z=$z_0$±5mm with $z_0$=0, ±2.5 and ±5mm | | | | |

Figure 5